# EUROPEAN PATENT APPLICATION

(11) **EP 2 945 456 A1**
(43) Date of publication of application: **18.11.2015**
(21) Application number: 13874189.7
(22) Date of filing: 31.01.2013
(51) Int. Cl.: H04W 76/04

(54) **METHOD, PERMANENT ONLINE CONTROLLER AND DEVICE FOR KEEPING APPLICATION ONLINE**

(71) Applicant: Huawei Technologies Co., Ltd., Longgang District Shenzhen, Guangdong 518129 (CN)
(72) Inventor: SHEN, Zhimin, Shenzhen Guangdong 518129 (CN); LI, Jian, Shenzhen Guangdong 518129 (CN); ZHOU, Wentao, Shenzhen Guangdong 518129 (CN); LIU, Qingshun, Shenzhen Guangdong 518129 (CN)
(74) Representative: Epping - Hermann - Fischer
(86) International application number: PCT/CN2013/071227
(87) International publication number: WO 2014/117375

(57) **Abstract**

Embodiments of the present invention provide a method for keeping an application online, an always-online controller, and a device. The method includes: receiving an always-online request message, sent by a first device, of the application, where the always-online request message includes a user identity; sending a bearer always-online request message including the user identity to a gateway device, so that the gateway device keeps a bearer tunnel corresponding to the user identity always online; and sending an always-online response message to the first device; where the first device is a UE, and a second device is an OTT server, or the first device is an OTT server, and a second device is a UE. In the embodiments of the present invention, by sending an always-online request to an always-online controller, and further enabling a gateway device to keep a bearer tunnel always online, it is implementing that an application is always online and a heartbeat packet exchange is avoided, thereby saving signaling.

## Description

### TECHNICAL FIELD

Embodiments of the present invention relate to communications technologies, and in particular, to a method for keeping an application online, an always-online controller, and a device.

### BACKGROUND

With continuous development of intelligent terminals, a plurality of applications on the mobile Internet needs to remain always online for service requirements. For example, based on an always-online service, some applications on the intelligent terminals may receive, in real time, push messages sent by developers of the applications, so that users have better real-time experience.

In the prior art, to remain always online, a heartbeat packet handshake mechanism is used, and specifically, there are two manners. One manner is that different applications independently maintain their heartbeats, that is, applications that are on a user equipment (User Equipment, UE for short) and need to remain always online periodically send heartbeat packets to corresponding application servers by using respective independent data channels, so as to notify the application servers that the applications are in an online state; the other manner is an Apple platform iOS push mechanism (Apple Push Notification service, APNS for short) developed by Apple Incorporation, where each application receives and sends a message by using this platform, an application developer sends a message to the APNS, then the APNS sends the message to a specified UE, and a corresponding application is started, so as to keep the application always online.

In a process of implementing embodiments of the present invention, it is found that in a method for keeping always online in the prior art, a channel for signaling exchanges needs to be established, and multiple signaling exchanges are required to keep an application always online, thereby resulting in a waste of signaling traffic.

### SUMMARY

Embodiments of the present invention provide a method for keeping an application online, an always-online controller, and a device, so as to resolve a problem of a signaling waste caused by heartbeat packet exchanges between a UE and an OTT server required for keeping online. A first aspect of the embodiments of the present invention provides a method for keeping an application online, including:
receiving an always-online request message, sent by a first device, of the application, where the always-online request message includes a user identity;
sending a bearer always-online request message including the user identity to a gateway device;
sending an always-online response message to the first device; where
the first device is a user equipment UE, and a second device is an over the top OTT server; or the first device is an OTT server, and a second device is a UE.

With reference to the first aspect, in a first possible implementation manner of the first aspect, after the receiving an always-online request message, sent by a UE or an OTT server, of the application, the method further includes:
sending a keepalive packet of a firewall to the OTT server at a preset period.

With reference to the first possible implementation manner of the first aspect, in a second possible implementation manner of the first aspect, the sending a keepalive packet of a firewall to the OTT server at a preset period includes:
constructing the keepalive packet of the firewall according to a flow description context included in the always-online request message; and
sending the keepalive packet of the firewall to the OTT server at the preset period, where the preset period is shorter than an aging period of the firewall.

With reference to the second possible implementation manner of the first aspect, in a third possible implementation manner of the first aspect, the constructing the keepalive packet of the firewall according to a flow description context included in the always-online request message includes:
using a source IP address, a source port, a destination IP address, a destination port, and a protocol type that are carried in the flow description context to construct the keepalive packet of the firewall, and using a preset code stream to construct content of the keepalive packet of the firewall.

With reference to any one of the first aspect to the third possible implementation manner of the first aspect, in a fourth possible implementation manner of the first aspect, the receiving an always-online request message, sent by a user equipment UE or an OTT server, of the application includes:
receiving the always-online request message of the application, where the always-online request message is sent by the UE or the OTT server by using an application programming interface API access gateway.

With reference to any one of the first aspect to the fourth possible implementation manner of the first aspect, in a fifth possible implementation manner of the first aspect, the always-online request message further includes start time and end time that are used to instruct to keep the bearer tunnel always online, so that an always-online controller controls time during which the bearer tunnel is kept always online.

With reference to any one of the first aspect to the fifth possible implementation manner of the first aspect, in a sixth possible implementation manner of the first aspect, after the sending an always-online response message to the UE or the OTT server, the method further includes:
receiving an always-online update request message that is sent by the UE or the OTT server when a status of the bearer tunnel changes, where the always-online update request message includes the user identity and the flow description context.

A second aspect of the embodiments of the present invention provides a method for keeping an application online, including:
sending, by a first device, an always-online request message of the application to an always-online controller, where the always-online request message includes a user identity; and
receiving, by the first device, an always-online response message sent by the always-online controller; where
the first device is a user equipment UE, and a second device is an over the top OTT server; or the first device is an OTT server, and a second device is a UE.

With reference to the second aspect, in a first possible implementation manner of the second aspect, the always-online request message further includes a flow description context, where the flow description context is used by the always-online controller to construct a keepalive packet of a firewall.

With reference to the second aspect or the first possible implementation manner of the second aspect, in a second implementation manner of the second aspect, the sending, by a first device, an always-online request message of the application to an always-online controller includes:
sending, by the first device, the always-online request message of the application to the always-online controller by using an application programming interface API access gateway.

With reference to the second aspect, in a third possible implementation manner of the second aspect, the receiving, by the first device, an always-online response message sent by the always-online controller includes:
receiving, by the first device, the always-online response message that is sent by the always-online controller after the always-online controller enables a gateway device to keep a bearer tunnel corresponding to the user identity always online.

With reference to any one of the second aspect to the third possible implementation manner of the second aspect, in a fourth possible implementation manner of the second aspect, the always-online request message further includes start time and end time that are used to instruct the always-online controller to keep the bearer tunnel always online, so that the always-online controller controls time during which the bearer tunnel is kept always online. With reference to any one of the second aspect to the third possible implementation manner of the fourth aspect, in a fifth possible implementation manner of the second aspect, after the receiving, by the first device, an always-online response message sent by the always-online controller, the method further includes:
sending, by the first device, an always-online update request message to the always-online controller when a status of the bearer tunnel changes, where the always-online update request message includes the user identity and the flow description context.

A third aspect of the present invention provides an always-online controller, including:
a receiving module, configured to receive an always-online request message, sent by a first device, of an application, where the always-online request message includes a user identity; and
a sending module, configured to: send a bearer always-online request message including the user identity to a gateway device, so that the gateway device keeps a bearer tunnel corresponding to the user identity always online; and send an always-online response message to the first device; where
the first device is a user equipment UE, and a second device is an over the top OTT server; or the first device is an OTT server, and a second device is a UE.

With reference to the third aspect, in a first possible implementation manner of the third aspect, the sending module is further configured to send a keepalive packet of a firewall to the OTT server at a preset period.

With reference to the first possible implementation manner of the third aspect, in a second possible implementation manner of the third aspect, the sending module includes:
a constructing unit, configured to construct the keepalive packet of the firewall according to a flow description context included in the always-online request message; and
a sending unit, configured to send the keepalive packet of the firewall to the OTT server at the preset period, where the preset period is shorter than an aging period of the firewall.

With reference to the second possible implementation manner of the third aspect, in a third possible implementation manner of the third aspect, the constructing unit is specifically configured to use a source IP address, a source port, a destination IP address, a destination port, and a protocol type that are carried in the flow description context to construct the keepalive packet of the firewall, and use a preset code stream to construct content of the keepalive packet of the firewall.

With reference to any one of the third aspect to the third possible implementation manner of the third aspect, in a fourth possible implementation manner of the third aspect, the receiving module is specifically configured to receive the always-online request message of the application, where the always-online request message is sent by the UE or the OTT server by using an application programming interface API access gateway.

With reference to any one of the third aspect to the fourth possible implementation manner of the third aspect, in a fifth possible implementation manner of the third aspect, the always-online request message further includes start time and end time that are used to instruct to keep the bearer tunnel always online, so that the always-online controller controls time during which the bearer tunnel is kept always online.

With reference to any one of the third aspect to the fifth possible implementation manner of the third aspect, in a sixth possible implementation manner of the third aspect, the receiving module is further configured to receive an always-online update request message that is sent by the UE or the OTT server when a status of the bearer tunnel changes, where the always-online update request message includes the user identity and the flow description context.

A fourth aspect of the embodiments of the present invention provides a device, where the device is a first device and includes:
a sending module, configured to send an always-online request message of an application to an always-online controller, where the always-online request message includes a user identity; and
a receiving module, configured to receive an always-online response message sent by the always-online controller, so that the first device and a second device do not exchange heartbeat packets; where
the first device is a user equipment UE, and the second device is an over the top OTT server; or the first device is an OTT server, and the second device is a UE.

With reference to the fourth aspect, in a first possible implementation manner of the fourth aspect, the always-online request message further includes a flow description context, where the flow description context is used by the always-online controller to construct a keepalive packet of a firewall.

With reference to the fourth aspect or the first possible implementation manner of the fourth aspect, in a second possible implementation manner of the fourth aspect, the sending module is specifically configured to send the always-online request message of the application to the always-online controller by using an application programming interface API access gateway. With reference to the fourth aspect, in a third possible implementation manner of the fourth aspect, the receiving module is specifically configured to receive the always-online response message that is sent by the always-online controller after the always-online controller enables a gateway device to keep a bearer tunnel corresponding to the user identity always online. With reference to any one of the fourth aspect to the third possible implementation manner of the fourth aspect, in a fourth possible implementation manner of the fourth aspect, the always-online request message further includes start time and end time that are used to instruct the always-online controller to keep the bearer tunnel always online, so that the always-online controller controls time during which the bearer tunnel is kept always online. With reference to any one of the fourth aspect to the third possible implementation manner of the fourth aspect, in a fourth possible implementation manner of the fourth aspect, the sending module is further configured for the first device to send an always-online update request message to the always-online controller when a status of the bearer tunnel changes, where the always-online update request message includes the user identity and the flow description context.

A fifth aspect of the embodiments of the present invention provides an always-online controller, including:
a receiver, configured to receive an always-online request message, sent by a first device, of an application, where the always-online request message includes a user identity; and
a sender, configured to: send a bearer always-online request message including the user identity to a gateway device, so that the gateway device keeps a bearer tunnel corresponding to the user identity always online; and send an always-online response message to the first device; where
the first device is a user equipment UE, and a second device is an over the top OTT server; or the first device is an OTT server, and a second device is a UE.

With reference to the fifth aspect, in a first possible implementation manner of the fifth aspect, the sender is further configured to send a keepalive packet of a firewall to the OTT server at a preset period.

With reference to the first possible implementation manner of the fifth aspect, in a second possible implementation manner of the fifth aspect, the always-online controller further includes:
a processor, configured to construct the keepalive packet of the firewall according to a flow description context included in the always-online request message, where
the sender is specifically configured to send the keepalive packet of the firewall to the OTT server at the preset period, where the preset period is shorter than an aging period of the firewall.

With reference to the second possible implementation manner of the fifth aspect, in a third possible implementation manner of the fifth aspect, the processor is specifically configured to use a source IP address, a source port, a destination IP address, a destination port, and a protocol type that are carried in the flow description context to construct the keepalive packet of the firewall, and use a preset code stream to construct content of the keepalive packet of the firewall.

With reference to any one of the fifth aspect to the third possible implementation manner of the fifth aspect, in a fourth possible implementation manner of the fifth aspect, the receiver is specifically configured to receive the always-online request message of the application, where the always-online request message is sent by the UE or the OTT server by using an application programming interface API access gateway.

With reference to any one of the fifth aspect to the fourth possible implementation manner of the fifth aspect, in a fifth possible implementation manner of the fifth aspect, the always-online request message further includes start time and end time that are used to instruct to keep the bearer tunnel always online, so that the always-online controller controls time during which the bearer tunnel is kept always online.

With reference to any one of the fifth aspect to the fifth possible implementation manner of the fifth aspect, in a sixth possible implementation manner of the fifth aspect, the receiver is further configured to receive an always-online update request message that is sent by the UE or the OTT server when a status of the bearer tunnel changes, where the always-online update request message includes the user identity and the flow description context.

A sixth aspect of the embodiments of the present invention provides a device, where the device is a first device and includes:
a sender, configured to send an always-online request message of an application to an always-online controller, where the always-online request message includes a user identity; and
a receiver, configured to receive an always-online response message sent by the always-online controller, so that the first device and a second device do not exchange heartbeat packets; where
the first device is a user equipment UE, and the second device is an over the top OTT server; or the first device is an OTT server, and the second device is a UE.

With reference to the sixth aspect, in a first possible implementation manner of the sixth aspect, the always-online request message further includes a flow description context, where the flow description context is used by the always-online controller to construct a keepalive packet of a firewall.

With reference to the sixth aspect or the first possible implementation manner of the sixth aspect, in a second possible implementation manner of the sixth aspect, the sender is specifically configured to send the always-online request message of the application to the always-online controller by using an application programming interface API access gateway. With reference to the sixth aspect, in a third possible implementation manner of the sixth aspect, the receiver is specifically configured to receive the always-online response message that is sent by the always-online controller after the always-online controller enables a gateway device to keep a bearer tunnel corresponding to the user identity always online.

With reference to any one of the sixth aspect to the third possible implementation manner of the sixth aspect, in a fourth possible implementation manner of the sixth aspect, the always-online request message further includes start time and end time that are used to instruct the always-online controller to keep the bearer tunnel always online, so that the always-online controller controls time during which the bearer tunnel is kept always online. With reference to any one of the sixth aspect to the third possible implementation manner of the sixth aspect, in a fourth possible implementation manner of the sixth aspect, the sender is further configured for the first device to send an always-online update request message to the always-online controller when a status of the bearer tunnel changes, where the always-online update request message includes the user identity and the flow description context.

In the embodiments of the present invention, an always-online request of an application is sent to an always-online controller, and then the always-online controller applies to a gateway device for always-online keeping, so that the gateway device keeps a corresponding bearer tunnel always online to implement that the foregoing application is always online. In this way, a heartbeat mechanism is not required for always-online keeping, which, on the one hand, saves signaling traffic in a heartbeat packet exchange process, and on the other hand, saves signaling traffic in a PDP tunnel reestablishment process.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a schematic flowchart of Embodiment 1 of a method for keeping an application online according to the present invention;
FIG. 2 is a schematic structural diagram of an application in Embodiment 2 of a method for keeping an application online according to the present invention;
FIG. 3 is a schematic flowchart of Embodiment 3 of a method for keeping an application online according to the present invention;
FIG. 4 is a schematic flowchart of Embodiment 4 of a method for keeping an application online according to the present invention;
FIG. 5 is a schematic structural diagram of Embodiment 1 of an always-online controller according to the present invention;
FIG. 6 is a schematic structural diagram of Embodiment 2 of an always-online controller according to the present invention;
FIG. 7 is a schematic structural diagram of Embodiment 1 of a device according to the present invention;
FIG. 8 is a schematic structural diagram of Embodiment 3 of an always-online controller according to the present invention; and
FIG. 9 is a schematic structural diagram of Embodiment 2 of a device according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

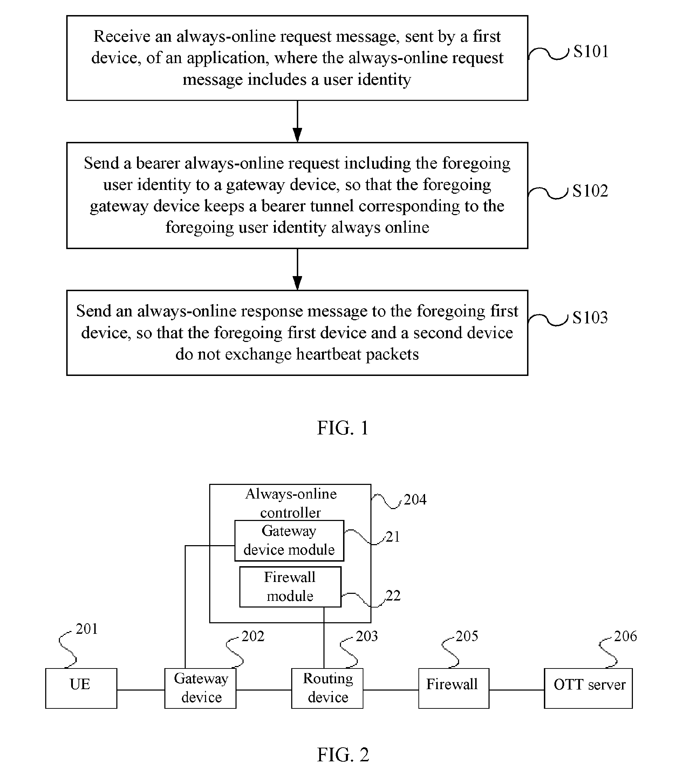

FIG. 1 is a schematic flowchart of Embodiment 1 of a method for keeping an application online according to the present invention. The method may be executed by an always-online controller. As shown in FIG. 1, the method includes:
S101. Receive an always-online request message, sent by a first device, of the application, where the always-online request message includes a user identity. The foregoing always-online request message is used by the first device to request for keeping an application always online.

The foregoing user identity information may be an international mobile subscriber identity (International Mobile Subscriber Identification Number, IMSI for short) or a mobile station international integrated services digital network (Integrated Services Digital Network, ISDN for short) number (Mobile Station international ISDN number, short for MSIDN). The user identity information is mainly used to identify a PDP tunnel that corresponds to a UE and needs to be kept alive, when a gateway device enables always online keeping, that is, when keep alive is performed for the foregoing PDP tunnel. The always-online controller records an always-online user according to the user identity to generate an always-online user list.

S102. Send a bearer always-online request including the foregoing user identity to a gateway device, so that the foregoing gateway device keeps a bearer tunnel corresponding to the foregoing user identity always online.

The bearer tunnel may be a Packet Data Protocol (Packet Data Protocol, PDP for short) tunnel, where the tunnel may be used for interactions between a UE and an over the top (Over the Top, OTT for short) server, and the OTT server is a server of an application developer, for example, a server of Tencent WeChat. After receiving the always-online request message, the always-online controller requests the gateway device to enable a bearer tunnel between a UE corresponding to the foregoing user identity and an OTT server to be always online, for example, enabling a PDP context to be always online. After the enabling, the gateway device stops processing on some features of the corresponding PDP tunnel, for example, recycling management processing on the PDP tunnel. After the bearer tunnel is enabled to be always online, aging processing is not performed on the bearer tunnel, that is, the bearer tunnel remains always online, so that an application corresponding to the tunnel can remain always online. When a user or an application developer wants to disable the always-online function, a request for disabling this function is then sent to the always-online controller. Alternatively, online time may be specified in the foregoing always-online request message, that is, this function is automatically disabled after the bearer tunnel remains online for a period of time. When there is a plurality of gateway devices, the always-online controller may send the foregoing bearer always-online request message to the gateway devices in a broadcast or unicast manner.

S103. Send an always-online response message to the foregoing first device, so that the foregoing first device and a second device do not exchange heartbeat packets. In one case, the first device is a UE and the second device is an OTT server; in another case, the first device is an OTT server and the second device is a UE.

In a specific implementation process, when the first device is a UE, after learning that the gateway device keeps the foregoing bearer tunnel always online, the always-online controller sends the always-online response message to the UE. In this case, the UE notifies the OTT server of a result of the always-online request, and afterwards, the UE and the OTT server do not need to exchange heartbeat packets any more. When the first device is an OTT server, similarly, after receiving the always-online response message, the OTT server notifies the UE of a result of the always-online request.

In the prior art, a dedicated data channel needs to be established between a UE and an OTT server for exchanging heartbeat packets, where the data channel passes through a wireless network, a gateway device, a firewall, and the like, and establishment of this data channel may lead to a large amount of signaling traffic. In addition, in the prior art, a PDP tunnel between the UE and the OTT server may age; when a heartbeat packet is sent, reestablishment of a PDP tunnel is activated, and the tunnel reestablishment process also consumes much signaling traffic.

In this embodiment, an always-online request of an application is sent to an always-online controller, and then the always-online controller applies to a gateway device for always-online keeping, so that the gateway device keeps a corresponding bearer tunnel always online to implement that the foregoing application is always online. In this way, a heartbeat mechanism is not required for always-online keeping, which, on the one hand, saves signaling traffic in a heartbeat packet exchange process, and on the other hand, saves signaling traffic in a PDP tunnel reestablishment process.

FIG. 2 is a schematic structural diagram of an application in Embodiment 2 of a method for keeping an application online according to the present invention. As shown in FIG. 2, an overall architecture for implementing the foregoing method includes a UE 201, a gateway device 202, a routing device 203, an always-online controller 204, a firewall 205, and an OTT server 206, where the always-online controller 204 may include a gateway device module 21 and a firewall module 22.

The always-online controller 204 may be deployed, over a Gi interface, between the gateway device 202 and the routing device 203. The gateway device may be a packet data network gateway (Packet data network GateWay, PGW for short) or a gateway general packet radio service (General Packet Radio Service, GPRS for short) support node (Gateway GPRS Support Node, GGSN for short), or there may be multiple gateways, for example, there may further be a serving gateway (Serving Gateway, SGW for short) or a serving GPRS support node (Serving GPRS Support Node, SGSN for short). The routing device 203 may be a router or a switch. In addition, the always-online controller 204 may have two types of interfaces. One type is connected to a public network tunnel, where the public network tunnel originally exists and does not need to be specially established. The UE or the OTT server may send an always-online request message to the always-online controller by using the public network tunnel. If the UE 201 sends an always-online request message to the always-online controller 204, the foregoing public network tunnel may be from the UE 201, through the foregoing gateway device, to the always-online controller 204; if the OTT server sends an always-online request message to the always-online controller 204, the foregoing public network tunnel may be from the OTT server 206, through the firewall 205 and the routing device 203, to the always-online controller 204. The other type of interface is an internal interface connected to an established private network tunnel, where there may be multiple private network tunnels, which are separately connected to the gateway device 202 and the routing device 203. The gateway device 202 may be connected to the gateway device module 21 in the always-online controller 204 by using a first private network tunnel, and when a bearer always-online request message is sent to the gateway device, the bearer always-online request message may be sent by using the first private network tunnel; the routing device 203 may be connected to the firewall module 22 in the always-online controller 204 by using a second private network tunnel, and when the firewall needs to be kept always-online subsequently, a keepalive packet of the firewall may be sent by using the second private network tunnel.

Further, after receiving an always-online request message, sent by the UE or the OTT server, of an application, the always-online controller sends a keepalive packet of the firewall to the foregoing OTT server at a preset period, which is specifically: constructing the keepalive packet of the firewall according to a flow description context included in the foregoing always-online request message, and sending the foregoing keepalive packet of the firewall to the foregoing OTT server at the preset period, where the preset period is shorter than an aging period of the foregoing firewall, so that the firewall through which the keepalive packet of the firewall passes does not perform aging processing on a forwarding table. Specifically, when the UE interacts with the OTT server by using a bearer tunnel, a message passes through the firewall, where a source network Internet Protocol (Internet Protocol, IP for short) address and a destination IP address exist in the firewall. If the corresponding forwarding table is aged, the message exchanged between the UE and the OTT server may fail to pass through the firewall to arrive at a peer end. Therefore, when there is a firewall in a network architecture, to enable an application to remain online, in addition to PDP keepalive, a corresponding forwarding table in the firewall should not be aged. Generally, if a forwarding table in a firewall is not accessed within a preset aging period, aging processing is performed on this forwarding table. To enable the firewall not to perform aging processing on the forwarding table, the always-online controller sends a keepalive packet of the firewall to the OTT server at a preset period shorter than the foregoing aging period, so that when the keepalive packet of the firewall passes through the firewall, the corresponding forwarding table is accessed, and the forwarding table is not aged.

Still further, the constructing the keepalive packet of the firewall according to a flow description context included in the foregoing always-online request message is specifically: using a source IP address, a source port, a destination IP address, a destination port, and a protocol type that are included in the foregoing flow description context to construct the foregoing keepalive packet of the firewall, and using a preset code stream to construct content of the foregoing keepalive packet of the firewall, where the flow description context may be carried in the foregoing always-online request message and used to describe an application service flow to be kept alive, and specifically, one always-online request message may carry multiple flow description contexts. Then, the keepalive packet of the firewall is sent to the foregoing OTT server at the preset period, so that the firewall through which the foregoing keepalive packet of the firewall passes does not perform aging processing on the forwarding table, where the preset period is shorter than the aging period of the firewall, that is, this period may be flexibly set according to duration of a timer configured by the firewall. For example, if content of a forwarding table to be kept alive is "HTTP, 213.3.174.224:63336→125.211.214.154:80", a constructed keepalive packet of the firewall may be a packet shown in Table 1:

**Table 1**

| Source IP | Destination IP | Source port | Destination port | | Protocol |
|---|---|---|---|---|---|
| 213.3.174.224 | 125.211.214.154 | 63336 | 80 | 06 | |

In Table 1, "Protocol, 06" represents a protocol identifier.

In addition, the receiving an always-online request message, sent by the UE or the OTT server, of an application may be receiving the always-online request message of the application, where the always-online message is sent by the UE or the OTT server by using an application programming interface (Application Programming Interface, API for short) access gateway. That is, before the UE or the OTT server sends the always-online request message to the always-online controller, the API access gateway serves as an access point of a third party to provide security protection for a network, and cooperates with an API operations support system to complete an access authentication and authorization process for the third party, which specifically refers to completion of authentication and authorization on the foregoing UE and OTT server in this embodiment of the present invention, so that an always-online server can receive a request message sent by the foregoing UE and OTT server. After the authentication and authorization, the always-online controller may provide an always-online capability for the authorized UE and OTT server. The foregoing API access gateway may be an independent device, or may be integrated in the foregoing always-online controller.

It should be noted that the foregoing always-online request message may further include start time and end time that are used to instruct to keep the bearer tunnel always online, so that the always-online controller controls time during which the bearer tunnel is kept always online. After receiving the always-online request message, the always-online controller applies to the gateway device for enabling the always-online function according to the start time carried in the always-online request message, and then for disabling the foregoing always-online function according to the end time. If the always-online controller does not carry the start time and the end time, the always-online controller applies to the gateway device for enabling the always-online function when the foregoing always-online request message is received, and for disabling the always-online function when a user requests for disabling the always-online function.

In a specific implementation process, after sending an always-online response message to the foregoing UE or OTT server, the always-online controller further receives an always-online update request message that is sent by the foregoing UE or OTT server when a status of the bearer tunnel changes, where the always-online update request message includes the user identity and the flow description context. Specifically, after the foregoing gateway device enables the always-online function, the status of the foregoing bearer tunnel may change, for example, an IP address of the UE or the OTT server on either side of the bearer tunnel may change, and the always-online server needs to be notified. That is, the UE or the OTT server initiates an always-online update request, and after receiving the always-online update request message, the always-online server further notifies the gateway device. For an abnormal phenomenon, for example, a network to which a user is connected is disconnected, that is, the user is not in an online state, or a user name changes, the gateway device may perceive these exceptions and notify the always-online controller, so that the always-online controller suspends an always-online service for a corresponding user or OTT server. After a user connection is resumed, the always-online controller activates the always-online capability again.

In this embodiment, an always-online request of an application is sent to an always-online controller, and then the always-online controller applies to a gateway device for always-online keeping, so that the gateway device keeps a corresponding bearer tunnel always online. In addition, a keepalive packet of a firewall is sent to an OTT server at a preset period, which can further prevent the firewall from performing aging processing on a forwarding table, so as to implement that the foregoing application is always online. In this way, a heartbeat mechanism is not required for always-online state keeping, which, on the one hand, saves signaling traffic in a heartbeat packet exchange process, and on the other hand, saves signaling traffic in a PDP tunnel reestablishment process. Signaling traffic can be further reduced if this embodiment of the present invention is combined with cell paging (Cell_PCH) of an intelligent terminal optimization solution.

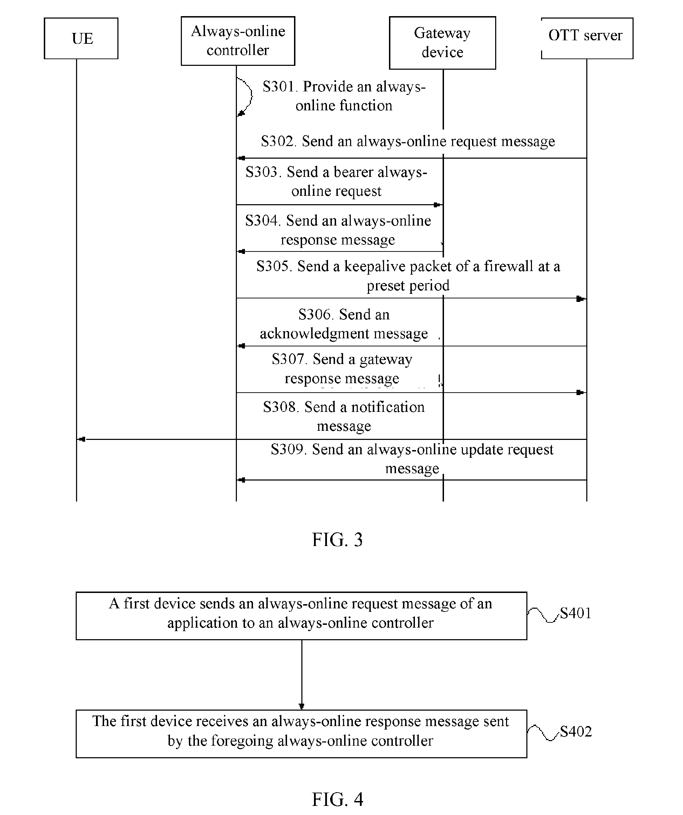

FIG. 3 is a schematic flowchart of Embodiment 3 of a method for keeping an application online according to the present invention. By using an example in which an OTT server initiates an always-online request, an entire process of the method is:
S301. An always-online controller provides an always-online function externally. Specifically, the always-online function may be provided by an operator.
S302. The OTT server sends an always-online request message to the always-online controller, where the always-online controller includes a user identity, that is, an identifier of a UE corresponding to an application that the OTT server expects to be always online.
S303. The always-online controller sends a bearer always-online request to a gateway device, so that the gateway device enables a bearer tunnel between the UE corresponding to the foregoing user identity and the OTT server.
S304. The gateway device sends an always-online response message to the always-online controller, so as to notify the always-online controller that the corresponding bearer tunnel has been enabled to be always online.
S305. The always-online controller sends a keepalive packet of a firewall to the foregoing OTT server at a preset period, so that the firewall through which the foregoing keepalive packet of the firewall passes does not perform aging processing on a forwarding table, where the preset period is shorter than an aging period of the firewall.
   It should be noted that a sequence of the foregoing steps is not limited as long as S305 is performed after S301.
S306. The OTT server sends an acknowledgment message to the always-online controller, so as to acknowledge that the keepalive packet of the firewall has been received. Specifically, the OTT server may send the acknowledgment message to the always-online controller by using an API. It should be noted that the keepalive packet of the firewall may be successfully received by the OTT server generally. Therefore, S306 is optional and may be skipped.
S307. The always-online controller sends a gateway response message to the OTT server, where the gateway response message is used to notify the OTT server of a processing result of the gateway device. In this process, that the gateway device enables an always-online function is used as an example.
S308. The OTT server sends a notification message to a corresponding UE, where the notification message is used to notify the UE that a heartbeat packet exchange is not required. End.
S309. The OTT server sends an always-online update message to the always-online controller. Specifically, S309 needs to be performed when a status of the foregoing bearer tunnel changes, and S303 to S308 are performed again after the always-online update message is received. Specifically, an initiating party may be replaced by the UE, and the entire process is unchanged. Before S302, the UE and the OTT server may negotiate that who initiates a request. Specifically, the foregoing S302 is replaced with that the UE sends an always-online request message to the always-online controller; the S307 is replaced with that the always-online controller sends a response message to the UE; S308 is replaced with that the UE sends a notification message to the OTT server; S309 may also be replaced with that the UE sends an always-online update message to the always-online controller.

FIG. 4 is a schematic flowchart of Embodiment 4 of a method for keeping an application online according to the present invention. The method is executed by a UE or an OTT server. As shown in FIG. 4, the method includes:
S401. A first device sends an always-online request message of the application to an always-online controller, where the always-online request message includes a user identity. The always-online request message further includes a flow description context, where the flow description context is used by the always-online controller to construct a keepalive packet of a firewall.
S402. The first device receives an always-online response message sent by the foregoing always-online controller, so that the first device and a second device do not exchange heartbeat packets, which may specifically be: receiving the always-online response message sent by the foregoing always-online controller after the always-online controller enables a gateway device to keep a bearer tunnel corresponding to the foregoing user identity always online.

Specifically, in one case, when an always-online initiator is the UE, the first device is the UE and the second device is the OTT server; in another case, when the always-online initiator is the OTT server, the first device is the OTT server and the second device is the UE.

A specific implementation process corresponds to the foregoing method embodiment, and details are not described herein again.

In this embodiment, a first device sends an always-online request message of an application to an always-online controller, so that the always-online controller applies to a gateway device for keeping a corresponding bearer tunnel online to implement that the application is kept online. In this way, a heartbeat mechanism is not required for always-online keeping, which, on the one hand, saves signaling traffic in a heartbeat packet exchange process, and on the other hand, saves signaling traffic in a PDP tunnel reestablishment process.

Further, that a first device sends an always-online request message of the application to an always-online controller may specifically be that the first device sends the always-online request message of the application to the foregoing always-online controller by using an API access gateway. Similar to the foregoing embodiment, the API access gateway may be used to perform authentication and authorization on the first device and the second device, that is, the foregoing UE and OTT server.

In addition, the always-online request message further includes start time and end time that are used to instruct the always-online controller to keep the bearer tunnel always online, so as to flexibly control online time according to a requirement of a user or an operator. Certainly, a user may also send a request for disabling an always-online function.

Further, after the first device receives the always-online response message sent by the always-online controller after the always-online controller enables the gateway device to keep the bearer tunnel corresponding to the user identity always online, when a status of the bearer tunnel changes, the first device sends an always-online update request message to the foregoing always-online controller, where the always-online update request message includes the user identity and the flow description context.

In this embodiment, a first device sends an always-online request message of an application to an always-online controller, so that the always-online controller applies to a gateway device for keeping a corresponding bearer tunnel online. In addition, a keepalive packet of a firewall is further constructed to prevent the firewall from performing aging processing on a forwarding table, so as to implement that the application is kept online. In this way, a heartbeat mechanism is not required for always-online keeping, which, on the one hand, saves signaling traffic in a heartbeat packet exchange process, and on the other hand, saves signaling traffic in a PDP tunnel reestablishment process.

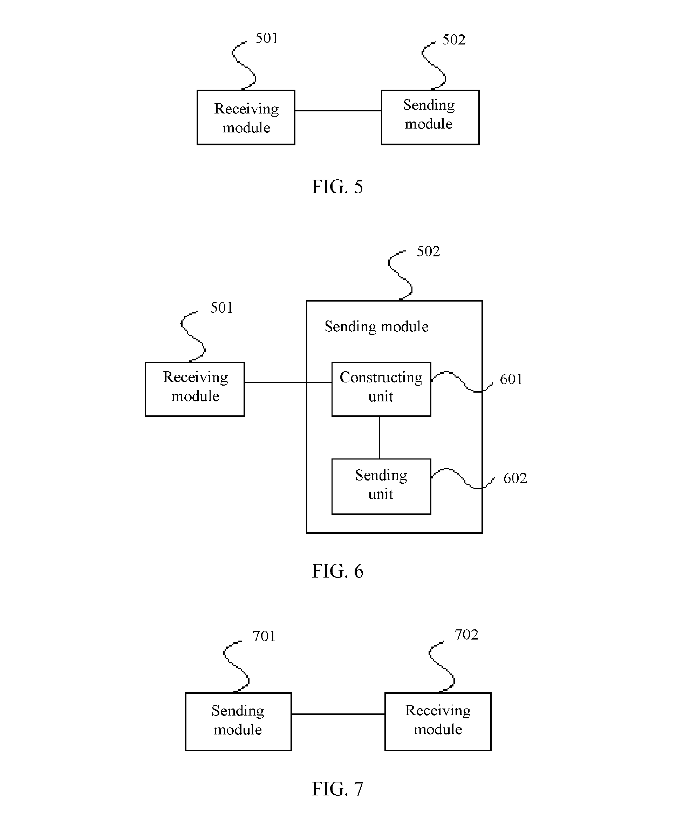

FIG. 5 is a schematic structural diagram of Embodiment 1 of an always-online controller according to the present invention. As shown in FIG. 5, the always-online controller may be set over a Gi interface between a gateway device and a routing device. The always-online controller includes a receiving module 501 and a sending module 502.

The receiving module 501 is configured to receive an always-online request message, sent by a first device, of an application, where the always-online request message includes a user identity. The sending module 502 is configured to: send a bearer always-online request message including the user identity to a gateway device, and send an always-online response message to the first device. The first device is a user equipment UE, and a second device is an over the top OTT server; or the first device is an OTT server, and a second device is a UE.

In this embodiment, an always-online request of an application is sent to an always-online controller, and then the always-online controller applies to a gateway device for always-online keeping, so that the gateway device keeps a corresponding bearer tunnel always online to implement that the foregoing application is always online. In this way, a heartbeat mechanism is not required for always-online keeping, which, on the one hand, saves signaling traffic in a heartbeat packet exchange process, and on the other hand, saves signaling traffic in a PDP tunnel reestablishment process.

Further, the sending module 502 is further configured to send a keepalive packet of a firewall to the OTT server at a preset period, so that the firewall through which the keepalive packet of the firewall passes does not perform aging processing on a forwarding table.

FIG. 6 is a schematic structural diagram of Embodiment 2 of an always-online controller according to the present invention. As shown in FIG. 6, based on FIG. 5, the foregoing sending module 502 includes a constructing unit 601 and a sending unit 602.

The constructing unit 601 is configured to construct the keepalive packet of the firewall according to a flow description context included in the always-online request message; the sending unit 602 is configured to send the keepalive packet of the firewall to the OTT server at the preset period, so that the firewall through which the keepalive packet of the firewall passes does not perform aging processing on the forwarding table, where the preset period is shorter than an aging period of the firewall.

Specifically, the constructing unit 601 uses a source IP address, a source port, a destination IP address, a destination port, and a protocol type that are carried in the flow description context to construct the keepalive packet of the firewall, and uses a preset code stream to construct content of the keepalive packet of the firewall.

In addition, the foregoing receiving module 501 is specifically configured to receive the always-online request message of the application, where the always-online request message is sent by the UE or the OTT server by using an application programming interface API access gateway. The always-online request message further includes start time and end time that are used to instruct to keep the bearer tunnel always online, so that the always-online controller controls time during which the bearer tunnel is kept always online.

Still further, the receiving module 501 may be further configured to receive an always-online update request message that is sent by the UE or the OTT server when a status of the bearer tunnel changes, where the always-online update request message includes the user identity and the flow description context.

In this embodiment, an always-online request of an application is sent to an always-online controller, and then the always-online controller applies to a gateway device for always-online keeping, so that the gateway device keeps a corresponding bearer tunnel always online. In addition, a keepalive packet of a firewall is sent to an OTT server at a preset period, which can further prevent the firewall from performing aging processing on a forwarding table, so as to implement that the foregoing application is always online. In this way, a heartbeat mechanism is not required for always-online keeping, which, on the one hand, saves signaling traffic in a heartbeat packet exchange process, and on the other hand, saves signaling traffic in a PDP tunnel reestablishment process. Signaling traffic can be further reduced if this embodiment of the present invention is combined with COPCH of an intelligent terminal optimization solution.

FIG. 7 is a schematic structural diagram of Embodiment 1 of a device according to the present invention, where the device is the foregoing first device. As shown in FIG. 7, the device includes a sending module 701 and a receiving module 702.

The sending module 701 is configured to send an always-online request message of an application to an always-online controller, where the always-online request message includes a user identity. The receiving module 702 is configured to receive an always-online response message sent by the always-online controller. The first device is a user equipment UE, and a second device is an over the top OTT server; or the first device is an OTT server, and a second device is a UE.

In this embodiment, a first device sends an always-online request message of an application to an always-online controller, so that the always-online controller applies to a gateway device for keeping a corresponding bearer tunnel online to implement that the application is kept online. In this way, a heartbeat mechanism is not required for always-online keeping, which, on the one hand, saves signaling traffic in a heartbeat packet exchange process, and on the other hand, saves signaling traffic in a PDP tunnel reestablishment process.

It should be noted that the always-online request message further includes a flow description context, where the flow description context is used by the always-online controller to construct a keepalive packet of a firewall. In addition, the always-online request message further includes start time and end time that are used to instruct the always-online controller to keep the bearer tunnel always online, so that the always-online controller controls time during which the bearer tunnel is kept always online.

The foregoing sending module 701 is specifically configured to send the always-online request message of the application to the always-online controller by using an application programming interface API access gateway.

Further, the sending module 701 is further configured for the first device to send an always-online update request message to the always-online controller when a status of the bearer tunnel changes, where the always-online update request message includes the user identity and the flow description context.

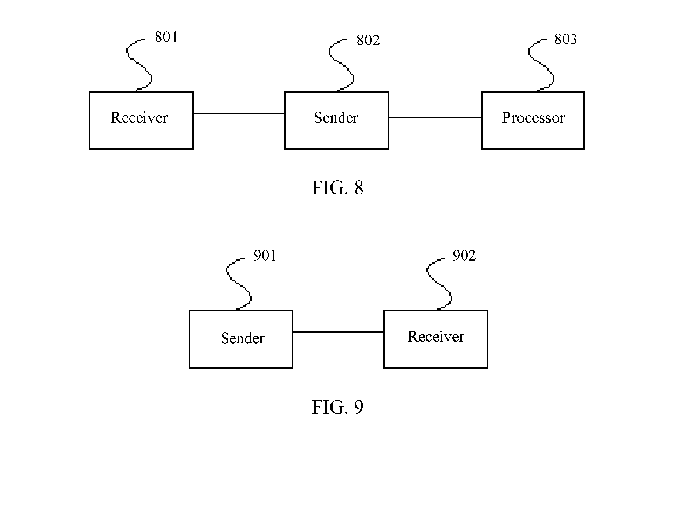

FIG. 8 is a schematic structural diagram of Embodiment 3 of an always-online controller according to the present invention. The always-online controller includes a receiver 801, a sender 802, and a processor 803, which may be connected to each other by using a bus. Specifically,
the receiver 801 is configured to receive an always-online request message, sent by a first device, of an application, where the always-online request message includes a user identity; and the sender 802 is configured to send: a bearer always-online request message including the user identity to a gateway device, so that the gateway device keeps a bearer tunnel corresponding to the user identity always online, and send an always-online response message to the first device; where the first device is a user equipment UE, and a second device is an over the top OTT server, or the first device is an OTT server, and a second device is a UE.

Further, the foregoing sender 802 is further configured to send a keepalive packet of a firewall to the OTT server at a preset period. Specifically, it may be that: first, the processor 803 constructs the keepalive packet of the firewall according to a flow description context included in the always-online request message, and then, the sender 802 sends the keepalive packet of the firewall to the OTT server at the preset period, where the preset period is shorter than an aging period of the firewall. More specifically, the foregoing processor 803 uses a source IP address, a source port, a destination IP address, a destination port, and a protocol type that are carried in the flow description context to construct the keepalive packet of the firewall, and uses a preset code stream to construct content of the keepalive packet of the firewall.

Still further, the receiver 801 is specifically configured to receive the always-online request message of the application, where the always-online request message is sent by the UE or the OTT server by using an application programming interface API access gateway.

It should be noted that the always-online request message further includes start time and end time that are used to instruct to keep the bearer tunnel always online, so that the always-online controller controls time during which the bearer tunnel is kept always online.

In addition, the receiver 801 is further configured to receive an always-online update request message that is sent by the UE or the OTT server when a status of the bearer tunnel changes, where the always-online update request message includes the user identity and the flow description context.

In this embodiment, an always-online request of an application is sent to an always-online controller, and then the always-online controller applies to a gateway device for always-online keeping, so that the gateway device keeps a corresponding bearer tunnel always online. In addition, a keepalive packet of a firewall is sent to an OTT server at a preset period, which can further prevent the firewall from performing aging processing on a forwarding table, so as to implement that the foregoing application is always online. In this way, a heartbeat mechanism is not required for always-online keeping, which, on the one hand, saves signaling traffic in a heartbeat packet exchange process, and on the other hand, saves signaling traffic in a PDP tunnel reestablishment process. Signaling traffic can be further reduced if this embodiment of the present invention is combined with COPCH of an intelligent terminal optimization solution.

FIG. 9 is a schematic structural diagram of Embodiment 2 of a device according to the present invention, where the device is the foregoing first device. As shown in FIG. 9, the device includes a sender 901 and a receiver 902, which may be connected to each other by using a bus. Specifically,
the sender 901 is configured to send an always-online request message of an application to an always-online controller, where the always-online request message includes a user identity; and the receiver 902 is configured to receive an always-online response message sent by the always-online controller, so that a first device and a second device do not exchange heartbeat packets, which is specifically: receiving the always-online response message sent by the always-online controller after the always-online controller enables a gateway device to keep a bearer tunnel corresponding to the user identity always online. The first device is a user equipment UE, and the second device is an over the top OTT server, or the first device is an OTT server, and the second device is a UE.

It should be noted that the always-online request message further includes a flow description context, where the flow description context is used by the always-online controller to construct a keepalive packet of a firewall. In addition, the always-online request message further includes start time and end time that are used to instruct the always-online controller to keep the bearer tunnel always online, so that the always-online controller controls time during which the bearer tunnel is kept always online.

Specifically, the foregoing sender 901 is specifically configured to send the always-online request message of the application to the always-online controller by using an application programming interface API access gateway.

Further, the sender 901 may be further configured for the first device to send an always-online update request message to the always-online controller when a status of the bearer tunnel changes, where the always-online update request message includes the user identity and the flow description context.

In this embodiment, a first device sends an always-online request message of an application to an always-online controller, so that the always-online controller applies to a gateway device for keeping a corresponding bearer tunnel online. In addition, a keepalive packet of a firewall is further constructed to prevent the firewall from performing aging processing on a forwarding table, so as to implement that the application is kept online. In this way, a heartbeat mechanism is not required for always-online keeping, which, on the one hand, saves signaling traffic in a heartbeat packet exchange process, and on the other hand, saves signaling traffic in a PDP tunnel reestablishment process.

Persons of ordinary skill in the art may understand that all or some of the steps of the foregoing method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A method for keeping an application online, comprising:
receiving an always-online request message, sent by a first device, of the application, wherein the always-online request message comprises a user identity;
sending a bearer always-online request message comprising the user identity to a gateway device, so that the gateway device keeps a bearer tunnel corresponding to the user identity always online; and
sending an always-online response message to the first device; wherein
the first device is a user equipment UE, and a second device is an over the top OTT server; or the first device is an OTT server, and a second device is a UE.

2. The method according to claim 1, after the receiving an always-online request message, sent by a UE or an OTT server, of the application, further comprising:
sending a keepalive packet of a firewall to the OTT server at a preset period.

3. The method according to claim 2, the sending a keepalive packet of a firewall to the OTT server at a preset period comprises:
constructing the keepalive packet of the firewall according to a flow description context comprised in the always-online request message; and
sending the keepalive packet of the firewall to the OTT server at the preset period, wherein the preset period is shorter than an aging period of the firewall.

4. The method according to claim 3, wherein the constructing the keepalive packet of the firewall according to a flow description context comprised in the always-online request message comprises:
using a source IP address, a source port, a destination IP address, a destination port, and a protocol type that are carried in the flow description context to construct the keepalive packet of the firewall, and using a preset code stream to construct content of the keepalive packet of the firewall.

5. The method according to any one of claims 1 to 4, wherein the receiving an always-online request message, sent by a user equipment UE or an OTT server, of the application comprises:
receiving the always-online request message of the application, wherein the always-online request message is sent by the UE or the OTT server by using an application programming interface API access gateway.

6. The method according to any one of claims 1 to 5, wherein the always-online request message further comprises start time and end time that are used to instruct to keep the bearer tunnel always online, so that an always-online controller controls time during which the bearer tunnel is kept always online.

7. The method according to any one of claims 1 to 6, after the sending an always-online response message to the UE or the OTT server, further comprising:
receiving an always-online update request message that is sent by the UE or the OTT server when a status of the bearer tunnel changes, wherein the always-online update request message comprises the user identity and the flow description context.

8. A method for keeping an application online, comprising:
sending, by a first device, an always-online request message of the application to an always-online controller, wherein the always-online request message comprises a user identity; and
receiving, by the first device, an always-online response message sent by the always-online controller; wherein
the first device is a user equipment UE, and a second device is an over the top OTT server; or the first device is an OTT server, and a second device is a UE.

9. The method according to claim 8, wherein the always-online request message further comprises a flow description context, wherein the flow description context is used by the always-online controller to construct a keepalive packet of a firewall.

10. The method according to claim 8 or 9, wherein the sending, by a first device, an always-online request message of the application to an always-online controller comprises:
sending, by the first device, the always-online request message of the application to the always-online controller by using an application programming interface API access gateway.

11. The method according to claim 8, wherein the receiving, by the first device, an always-online response message sent by the always-online controller comprises:
receiving, by the first device, the always-online response message that is sent by the always-online controller after the always-online controller enables a gateway device to keep a bearer tunnel corresponding to the user identity always online.

12. The method according to any one of claims 8 to 11, wherein the always-online request message further comprises start time and end time that are used to instruct the always-online controller to keep the bearer tunnel always online, so that the always-online controller controls time during which the bearer tunnel is kept always online.

13. The method according to any one of claim 8 to 12, after the receiving, by the first device, an always-online response message sent by the always-online controller, further comprising:
sending, by the first device, an always-online update request message to the always-online controller when a status of the bearer tunnel changes, wherein the always-online update request message comprises the user identity and the flow description context.

14. An always-online controller, comprising:
a receiving module, configured to receive an always-online request message, sent by a first device, of an application, wherein the always-online request message comprises a user identity; and
a sending module, configured to: send a bearer always-online request message comprising the user identity to a gateway device, so that the gateway device keeps a bearer tunnel corresponding to the user identity always online; and send an always-online response message to the first device; wherein
the first device is a user equipment UE, and a second device is an over the top OTT server; or the first device is an OTT server, and a second device is a UE.

15. The always-online controller according to claim 14, wherein the sending module is further configured to send a keepalive packet of a firewall to the OTT server at a preset period.

16. The always-online controller according to claim 15, wherein the sending module comprises:
a constructing unit, configured to construct the keepalive packet of the firewall according to a flow description context comprised in the always-online request message; and
a sending unit, configured to send the keepalive packet of the firewall to the OTT server at the preset period, wherein the preset period is shorter than an aging period of the firewall.

17. The always-online controller according to claim 16, wherein the constructing unit is specifically configured to use a source IP address, a source port, a destination IP address, a destination port, and a protocol type that are carried in the flow description context to construct the keepalive packet of the firewall, and use a preset code stream to construct content of the keepalive packet of the firewall.

18. The always-online controller according to any one of claims 14 to 17, wherein the receiving module is specifically configured to receive the always-online request message of the application, wherein the always-online request message is sent by the UE or the OTT server by using an application programming interface API access gateway.

19. The always-online controller according to any one of claims 14 to 18, wherein the always-online request message further comprises start time and end time that are used to instruct to keep the bearer tunnel always online, so that the always-online controller controls time during which the bearer tunnel is kept always online.

20. The always-online controller according to any one of claims 14 to 19, wherein the receiving module is further configured to receive an always-online update request message that is sent by the UE or the OTT server when a status of the bearer tunnel changes, wherein the always-online update request message comprises the user identity and the flow description context.

21. A device, wherein the device is a first device and comprises:
a sending module, configured to send an always-online request message of an application to an always-online controller, wherein the always-online request message comprises a user identity; and
a receiving module, configured to receive an always-online response message sent by the always-online controller, so that the first device and a second device do not exchange heartbeat packets; wherein
the first device is a user equipment UE, and the second device is an over the top OTT server; or the first device is an OTT server, and the second device is a UE.

22. The device according to claim 21, wherein the always-online request message further comprises a flow description context, wherein the flow description context is used by the always-online controller to construct a keepalive packet of a firewall.

23. The device according to claim 21 or 22, wherein the sending module is specifically configured to send the always-online request message of the application to the always-online controller by using an application programming interface API access gateway.

24. The device according to claim 21, wherein the receiving module is specifically configured to receive the always-online response message that is sent by the always-online controller after the always-online controller enables a gateway device to keep a bearer tunnel corresponding to the user identity always online.

25. The device according to any one of claims 21 to 24, wherein the always-online request message further comprises start time and end time that are used to instruct the always-online controller to keep the bearer tunnel always online, so that the always-online controller controls time during which the bearer tunnel is kept always online.

26. The device according to any one of claims 21 to 24, wherein the sending module is further configured for the first device to send an always-online update request message to the always-online controller when a status of the bearer tunnel changes, wherein the always-online update request message comprises the user identity and the flow description context.

27. An always-online controller, comprising:
a receiver, configured to receive an always-online request message, sent by a first device, of an application, wherein the always-online request message comprises a user identity; and
a sender, configured to: send a bearer always-online request message comprising the user identity to a gateway device, so that the gateway device keeps a bearer tunnel corresponding to the user identity always online; and send an always-online response message to the first device; wherein
the first device is a user equipment UE, and a second device is an over the top OTT server; or the first device is an OTT server, and a second device is a UE.

28. The always-online controller according to claim 27, wherein the sender is further configured to send a keepalive packet of a firewall to the OTT server at a preset period.

29. The always-online controller according to claim 28, further comprising:
a processor, configured to construct the keepalive packet of the firewall according to a flow description context comprised in the always-online request message, wherein
the sender is specifically configured to send the keepalive packet of the firewall to the OTT server at the preset period, wherein the preset period is shorter than an aging period of the firewall.

30. The always-online controller according to claim 29, wherein the processor is specifically configured to use a source IP address, a source port, a destination IP address, a destination port, and a protocol type that are carried in the flow description context to construct the keepalive packet of the firewall, and use a preset code stream to construct content of the keepalive packet of the firewall.

31. The always-online controller according to any one of claims 27 to 30, wherein the receiver is specifically configured to receive the always-online request message of the application, wherein the always-online request message is sent by the UE or the OTT server by using an application programming interface API access gateway.

32. The always-online controller according to any one of claims 27 to 31, wherein the always-online request message further comprises start time and end time that are used to instruct to keep the bearer tunnel always online, so that the always-online controller controls time during which the bearer tunnel is kept always online.

33. The always-online controller according to any one of claims 27 to 32, wherein the receiver is further configured to receive an always-online update request message that is sent by the UE or the OTT server when a status of the bearer tunnel changes, wherein the always-online update request message comprises the user identity and the flow description context.

34. A device, wherein the device is a first device and comprises:
a sender, configured to send an always-online request message of an application to an always-online controller, wherein the always-online request message comprises a user identity; and
a receiver, configured to receive an always-online response message sent by the always-online controller; wherein
the first device is a user equipment UE, and a second device is an over the top OTT server; or the first device is an OTT server, and a second device is a UE.

35. The device according to claim 34, wherein the always-online request message further comprises a flow description context, wherein the flow description context is used by the always-online controller to construct a keepalive packet of a firewall.

36. The device according to claim 34 or 35, wherein the sender is specifically configured to send the always-online request message of the application to the always-online controller by using an application programming interface API access gateway.

37. The device according to claim 34, wherein the receiver is specifically configured to receive the always-online response message that is sent by the always-online controller after the always-online controller enables a gateway device to keep a bearer tunnel corresponding to the user identity always online.

38. The device according to any one of claims 34 to 37, wherein the always-online request message further comprises start time and end time that are used to instruct the always-online controller to keep the bearer tunnel always online, so that the always-online controller controls time during which the bearer tunnel is kept always online.

39. The device according to any one of claims 34 to 38, wherein the sender is further configured for the first device to send an always-online update request message to the always-online controller when a status of the bearer tunnel changes, wherein the always-online update request message comprises the user identity and the flow description context.
